(19) Europäisches Patentamt
European Patent Office
Office européen des brevets

(11) EP 4 407 506 A1

(12) EUROPEAN PATENT APPLICATION

(43) Date of publication:
31.07.2024 Bulletin 2024/31

(21) Application number: 24153837.0

(22) Date of filing: 25.01.2024

(51) International Patent Classification (IPC):
G06F 30/17 (2020.01)     G06F 30/27 (2020.01)
G06V 10/82 (2022.01)     G06F 113/12 (2020.01)

(52) Cooperative Patent Classification (CPC):
G06V 10/82; G06F 30/17; G06F 30/27;
G06F 2113/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.01.2023 KR 20230010372
15.12.2023 KR 20230183013

(71) Applicant: CLO Virtual Fashion Inc.
Seoul 06236 (KR)

(72) Inventors:
• JU, Eun Jung
  06236 Seoul (KR)
• CHOI, Myung Geol
  06236 Seoul (KR)
• KANG, Keu Cheol
  06236 Seoul (KR)
• KIM, Kwang Yun
  06236 Seoul (KR)
• YOON, Sungjin
  06236 Seoul (KR)

(74) Representative: Gill Jennings & Every LLP
The Broadgate Tower
20 Primrose Street
London EC2A 2ES (GB)

(54) METHOD AND APPARATUS FOR ESTIMATING PHYSICAL PROPERTY PARAMETER OF TARGET FABRIC

(57) A method and apparatus for estimating one or more physical property parameters of a target fabric include receiving a two-dimensional (2D) image capturing a draped shape of the target fabric and basic information of the target fabric, estimating the one or more physical property parameters of the target fabric by applying the 2D image and the basic information of the target fabric to a neural network model, the one or more physical property parameters including at least one of a stretching parameter of the target fabric and a bending parameter of the target fabric and outputting the one or more physical property parameters of the target fabric.

FIG. 7

**Description**

CROSS-REFERENCE TO RELATED APPLICATIONS

This application claims the priority benefit of Korean Patent Application No. 10-2023-0010372 filed on January 26, 2023, and Korean Patent Application No. 10-2023-0183013 filed on December 15, 2023, in the Korean Intellectual Property Office, the disclosures of which are incorporated herein by reference for all purposes.

BACKGROUND

1. Field

One or more embodiments relate to a method and apparatus for estimating a physical property parameter of a target fabric.

2. Description of Related Art

Clothes appear 3-dimensional (3D) when worn by a person, but clothes could be considered 2D because they are a combination of pieces of fabric cut according to a 2D pattern. Because fabric, the material of clothes, is flexible, the shape of the fabric may vary depending on the body shape or movements of a person wearing it. In addition, fabric may have various physical properties, such as strength, stretch, or shrinkage, and a difference in each physical property of the fabric may differentiate the representation or impression of clothes even though they have the same design.
With the wide use of computer-based clothing simulation technology to develop an actual clothes design in the fashion industry, it is significant to find an optimal simulation parameter for fabric that is used for clothes.
The above description is information the inventor(s) acquired during the course of conceiving the present disclosure, or already possessed at the time, and was not necessarily publicly known before the present application was filed.

SUMMARY

According to an aspect, there is provided a method of estimating one or more physical property parameters of a target fabric including: receiving a two-dimensional (2D) image capturing a draped shape of the target fabric and the basic information of the target fabric; estimating the one or more physical property parameters of the target fabric by applying the 2D image and the basic information of the target fabric to a neural network model, the one or more physical property parameters including at least one of a stretching parameter of the target fabric and a bending parameter of the target fabric; and outputting the one or more physical property parameters of the target fabric.
The basic information of the target fabric may include at least one of the type of the target fabric, the composition of the target fabric, the density of the target fabric, the weight of the target fabric, the thickness of the target fabric, dyeing of the target fabric, and adding of printing to the target fabric.
The neural network model may include at least one of a regression model configured to estimate the stretching parameter related to the stretching of the target fabric based on the basic information of the target fabric; an auto encoder configured to calculate latent vectors corresponding to the 2D image; or an estimation model trained to estimate the bending parameter related to the bending of the target fabric based on the latent vectors and the stretching parameter.
The estimating of the one or more physical property parameters of the target fabric may include estimating the stretching parameter by applying the basic information of the target fabric to a regression model trained based on basic information of actual fabrics and a set of physical property parameters of the actual fabrics; and estimating the bending parameter corresponding to the target fabric by applying latent vectors obtained by applying the 2D image to an auto encoder and the stretching parameter to an estimation model.
The estimating the stretching parameter may include encoding the basic information of the target fabric into features and estimating the stretching parameter by feeding the encoded features to the regression model.
The encoding may include encoding the features indicating the type of the target fabric among the basic information of the target fabric.
The regression model may output a vector of the stretching parameter obtained by dividing the features by the density of the target fabric as the encoded features are received.
The estimating the bending parameter may include obtaining the latent vectors corresponding to the 2D image by applying a silhouette image of the 2D image to the auto encoder and estimating the bending parameter corresponding to the target fabric by applying the latent vectors and the stretching parameter to the estimation model.
The obtaining the latent vectors may include generating the silhouette image of the 2D image by converting an area representing the target fabric in the 2D image into white and converting an area outside the target fabric in the 2D image into black.

The stretching parameter may correlate with the basic information of the target fabric and the bending parameter may correlate with the draped shape of the target fabric.

The outputting the one or more physical property parameters of the target fabric may include displaying a 3D drape simulation result corresponding to 3D clothes by applying the one or more physical property parameters to the target fabric used for the 3D clothes draped on an object.

The stretching parameter may include at least one of a weft stretch force parameter, a wrap stretch force parameter, or a shear parameter and the bending parameter may include at least one of a weft bending force parameter, a warp bending force parameter, or a diagonal bending force parameter.

The neural network model may estimate the one or more physical property parameters of the target fabric that is simulated by a mass-spring model.

The 2D image may include a top view image capturing the draped shape of a circular specimen of the target fabric.

According to another aspect, there is provided an apparatus for estimating one or more physical property parameters of a target fabric including: a communication interface configured to receive a 2D image capturing a draped shape of the target fabric and the basic information of the target fabric; a processor configured to estimate the one or more physical property parameters of the target fabric by applying the 2D image and the basic information of the target fabric to a neural network model, the one or more physical property parameters including at least one of a stretching parameter of the target fabric or a bending parameter of the target fabric; and an output device configured to output the one or more physical property parameters.

The neural network model may include at least one of a regression model configured to estimate the stretching parameter related to the stretching of the target fabric; an auto encoder configured to calculate latent vectors corresponding to the 2D image; or an estimation model trained to estimate the bending parameter related to the bending of the target fabric, based on the latent vectors and the stretching parameter.

The processor may estimate the stretching parameter by applying the basic information of the target fabric to a regression model trained based on basic information of actual fabrics and a set of physical property parameters of the actual fabrics and may estimate the bending parameter corresponding to the target fabric by applying latent vectors obtained by applying the 2D image to an auto encoder and the stretching parameter to an estimation model.

According to an aspect, by applying a 2D image capturing a draped shape of a target fabric and the basic information of the target fabric and estimating one or more physical property parameters of the target fabric, 3D clothes produced by the target fabric may be displayed more naturally and realistically.

According to an aspect, by using a draped shape of a circular specimen of the target fabric, visual variability may increase than when using a square specimen.

According to an aspect, by using the 2D image capturing the draped shape of the target fabric, the complexity of calculations that are performed by a neural network model to estimate the one or more physical property parameters of the target fabric may decrease.

According to an aspect, by using the circular specimen of the target fabric and using an estimation model that estimates a bending parameter based on a stretching parameter, the accuracy of estimation of the bending parameter may be improved.

Additional aspects of example embodiments will be set forth in part in the description which follows and, in part, will be apparent from the description, or may be learned by practice of the disclosure.

BRIEF DESCRIPTION OF THE DRAWINGS

These and/or other aspects, features, and advantages of the present disclosure will become apparent and more readily appreciated from the following description of example embodiments, taken in conjunction with the accompanying drawings of which:

FIG. 1 is a diagram illustrating a schematic operation of an apparatus for estimating one or more physical property parameters of a target fabric according to an embodiment.
FIG. 2 is a flowchart illustrating a method of estimating the one or more physical property parameters of the target fabric according to an embodiment.
FIG. 3 is a diagram illustrating a method of obtaining a two-dimensional (2D) image according to an embodiment.
FIG. 4 is another flowchart illustrating the method of estimating the one or more physical property parameters of the target fabric according to an embodiment.
FIG. 5 is a flowchart illustrating a method of estimating a stretching parameter according to an embodiment.
FIG. 6 is a flowchart illustrating a method of estimating a bending parameter according to an embodiment.
FIG. 7 is a diagram illustrating a specific operation of the apparatus for estimating the one or more physical property parameters of the target fabric according to an embodiment.

FIG. 8 is a diagram illustrating actual clothes and 3D clothes that are simulated by using the one or more physical property parameters of the target fabric estimated by a neural network model according to an embodiment.

FIG. 9 is a block diagram illustrating the apparatus for estimating the one or more physical property parameters of the target fabric according to an embodiment.

DETAILED DESCRIPTION

Hereinafter, examples will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. When one constituent element is described as being "connected", "coupled", or "attached" to another constituent element, it should be understood that one constituent element can be connected or attached directly to another constituent element, and an intervening constituent element can also be "connected", "coupled", or "attached" to the constituent elements.

The same name may be used to describe an element included in the embodiments described above and an element having a common function. Unless otherwise mentioned, the descriptions on the embodiments may be applicable to the following embodiments, and thus duplicated descriptions will be omitted for conciseness.

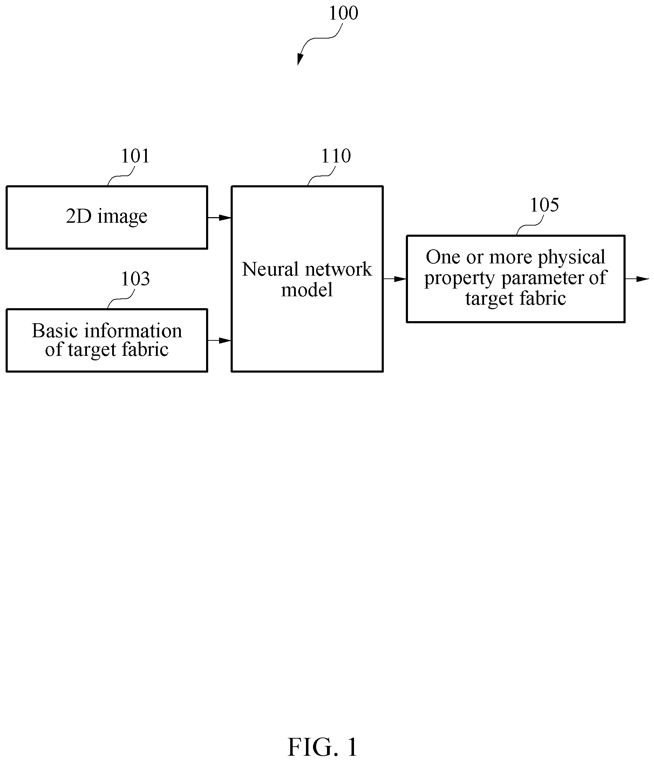

FIG. 1 is a diagram illustrating a schematic operation of an apparatus for estimating one or more physical property parameters of a target fabric according to an embodiment. Referring to FIG. 1, an apparatus for estimating one or more physical property parameters of a target fabric (hereinafter, an "estimation apparatus") 100 according to an embodiment may receive a two-dimensional (2D) image 101 and basic information 103 of the target fabric.

The "target fabric" may be a fabric of which one or more physical property parameters is targeted to be estimated through the estimation apparatus 100, which is a fabric that is to be used to make clothes.

(The target) fabric may be divided into, for example, woven fabric, knitted fabric, non-woven fabric, non-fabric, and/or other alternative fabrics. The woven fabric may be fabric that is woven by a loom. The woven fabric may be made by the intersection of warp and weft. The knitted fabric may be knitted by a knitting machine, that is, fabric knitted through knitting. The knitted fabric may be made by the formation of a loop of yarn. The non-woven fabric may be fabric that is not woven, such as animal fur or felt made by applying moisture, heat, or pressure to yarn, for example. Hereinafter, the terms "fabric" and "cloth" may be used interchangeably.

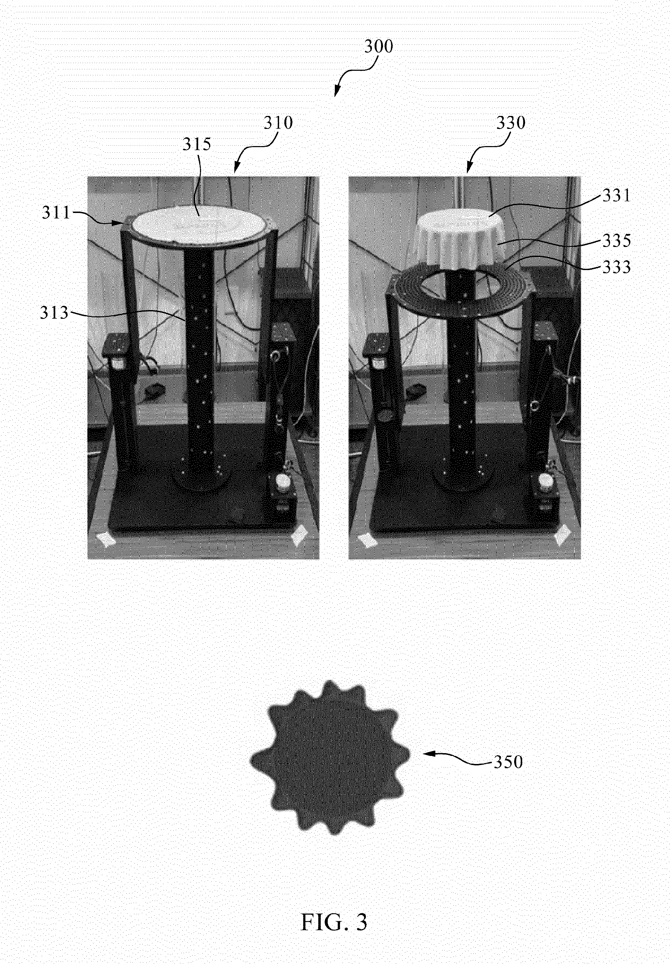

The 2D image 101 may be a top view image capturing a draped shape of circular specimens of the target fabric that is placed on a circular disk. For example, the 2D image 101 may be an image capturing natural and loose wrinkles when fabric is draped without any force after the target fabric is placed on a 3D geometric object, such as a drape test device shown in FIG. 3. The process of acquiring the 2D image 101 is described in detail below with reference to FIG. 3.

The basic information 103 of the target fabric may include, for example, at least two of or a combination of the type of the target fabric, the composition of the target fabric, the density of the target fabric, the weight of the target fabric, the thickness of the target fabric, whether dyeing is performed on the target fabric, and whether printing is added to the target fabric.

The "type of the target fabric" may be the woven shape of the target fabric. The woven shape of the target fabric may include, for example, plain weave or twill weave, in which warp and weft threads intersect 1: 1 in the plain weave and warp and weft threads are interlaced vertically at 3 strands or more and form complete weave in the twill weave, but examples are not necessarily limited thereto. Plain woven fabric includes, for example, cotton or calico. Twill woven fabric includes, for example, jersey, gabardine, denim, jeans, broadcloth, surah, ramie, or hemp.

The type of the target fabric may be one of 64 types (e.g., 'boucle', 'canvas', 'challis', 'chambray/oxford', 'chiffon', 'clip jacquard', 'corduroy', 'crepe/crepe de chine (CDC)', 'crepe knit', 'crochet', 'denim', 'Dewspo', 'dobby', 'dobby mesh', 'double knit/interlock', 'double weave', 'eyelet', 'flannel', 'flatback rib', 'fleece', 'French terry', 'gauze/double gauze', 'georgette', 'interlock twist yarn (ITY)/matte jersey', 'jacquard/brocade', ' 'jacquard knit', 'jersey', 'lace', 'loop terry', 'low gauge knit', 'Melton/boiled', 'memory', 'mesh/tulle', 'neoprene/scuba', 'organza', 'ottoman', 'polyvinyl chloride (PVC)', 'pique', 'plaid', 'plain', 'Pointelle', 'polar fleece', 'Ponte', 'poplin', 'quilted knit', 'rib', 'ripstop', 'satin', 'seersucker', 'sherpa', 'polyester/rayon/spandex (TRS)', 'taffeta', 'tricot', 'tweed', 'twill', 'Tyvek', 'vegan fur', 'vegan leather', 'vegan suede', 'velour', 'velvet', 'velvet/velveteen', 'voile', 'waffle', etc.). However, the types of the target fabric listed above are examples, and examples are not necessarily limited thereto.

The type of the target fabric may be expressed by a vector (e.g., one hot vector, etc.). The type of the target fabric may be expressed by, for example, an N-dimensional vector (a natural number, wherein N > 1). For example, when a first component of a vector indicates 'boucle', a vector corresponding to the 'boucle' may be expressed by (1, 0, 0, 0, 0, ... ,0), and when a second component of a vector indicates 'canvas', a vector corresponding to the 'canvas' may be expressed by (0, 1, 0, 0, ···, 0).

The target fabric may include, for example, 40 different materials. The "composition of the target fabric" may be a mixture ratio or blend ratio of constituents (fiber materials) included in the target fabric. The target fabric may include, for example, any one of or a combination of two or more of 'acetate', 'acrylic', 'alpaca', 'aluminum', 'angora', 'bamboo viscose', 'cationic dyeable polyester (CDP)', 'camel', 'cashmere', 'cation', 'cork', 'cotton', 'Cupro', 'ethylene-vinyl acetate copolymer (EVA)', 'jute', 'linen', 'lyocell', 'metallic', 'modal', 'mohair', 'nylon', 'organic cotton', 'polyethylene (PE)', 'polyethylene terephthalate (PTT)', 'polyvinyl chloride (PVC)', 'pima cotton', 'polyester', 'ramie', 'recycled nylon', 'recycled polyester', 'silicone', 'silk', 'spandex/elastane', 'supima cotton', 'triacetate (TA)', 'Tencel', 'lyocell', 'Tencel modal', 'thermoplastic poly urethane (TPU)', 'triacetate', 'viscose rayon', 'viscose from bamboo', and 'wool'. However, the constituents of the target fabric listed above are examples, and examples are not limited thereto. For example, when the target fabric is blended with two constituents, such as cotton and PE, the composition information may include a blend ratio (e.g., 6:4) of the constituents.

As the estimation apparatus 100 applies the 2D image 101 and the basic information 103 of the target fabric, a neural network model 110 may estimate and output one or more physical property parameters 105 of the target fabric including at least one of a stretching parameter of the target fabric and a bending parameter of the target fabric.

The neural network model 110 may be a model that learns a correlation between information (e.g., the 2D image 101 and the basic information 103 of the target fabric) of fabric of which the clothes are made and physical property parameters corresponding to the fabric information.

The neural network model 110 may be a neural network model that is trained to estimate the one or more physical property parameters 105 of the target fabric to reproduce a static draped shape of the target fabric. In addition, the neural network model 110 may estimate the one or more physical property parameters 105 of the target fabric that is simulated by a mass-spring model.

The one or more "physical property parameters" 105 of the target fabric may be a parameter indicating the physical property of the fabric. The physical property parameters may include, for example, at least one of a stretching parameter, a bending parameter, and a density parameter. Stretching, or a stretch force, may be a repulsive force against stretch in at least one of horizontal, vertical, and diagonal directions. The stretch may be the property of stretching and contracting of fabric. Bending, or a bending force, may be a repulsive force against the bending of fabric. Density may be measured by dividing the mass of fabric by the total area of the fabric. Hereinafter, the terms "stretch force" and "stretching" and the terms "bending force" and "bending" may be used interchangeably.

The stretching parameter may include at least one of a weft stretch force parameter, a warp stretch force parameter, or a shear force parameter. A shear force may be a force acting parallel to a side in an object when forces of the same magnitude in opposite directions act on the object at the same time. The weft stretch force parameter may include at least one of a weft stretch rest parameter and a weft stretch slope parameter. The warp stretch force parameter may include at least one of a warp stretch rest parameter and a warp stretch slope parameter. The shear force parameter may include at least one or both of a right shear force parameter and a left shear force parameter. The right shear force parameter may include at least one of a stretch rest of a right shear force and a stretch slope of a right shear force. The left shear force parameter may include at least one of a stretch rest of a left shear force and a stretch slope of a left shear force.

The bending parameter may include at least one of a weft bending force parameter, a warp bending force parameter, a right shear bending force parameter, a left shear bending force parameter, or a diagonal bending force parameter.

In this case, the "weft" may be a thread of a horizontal direction of fabric, which may be also referred to as a "weft thread". In addition, the "warp" may be a thread of a vertical direction of the fabric, which may be also referred to as a "warp thread".

According to an embodiment, the neural network model 110 may also be a neural network that learns a correlation between a plurality of physical property parameters and a mesh in which 3D fabric is draped on the object (e.g., an avatar or a mannequin).

The "physical property parameter" 105 may be a parameter used to reproduce a draped shape of 3D clothes that are produced with (the target) fabric by the mass-spring model. The "drape" herein may be a natural and loose wrinkle when fabric is draped without any force.

As is described later, the stretching parameter may correlate with the basic information 103 of the target fabric. The bending parameter may have a draped shape of the target fabric included in the 2D image 101.

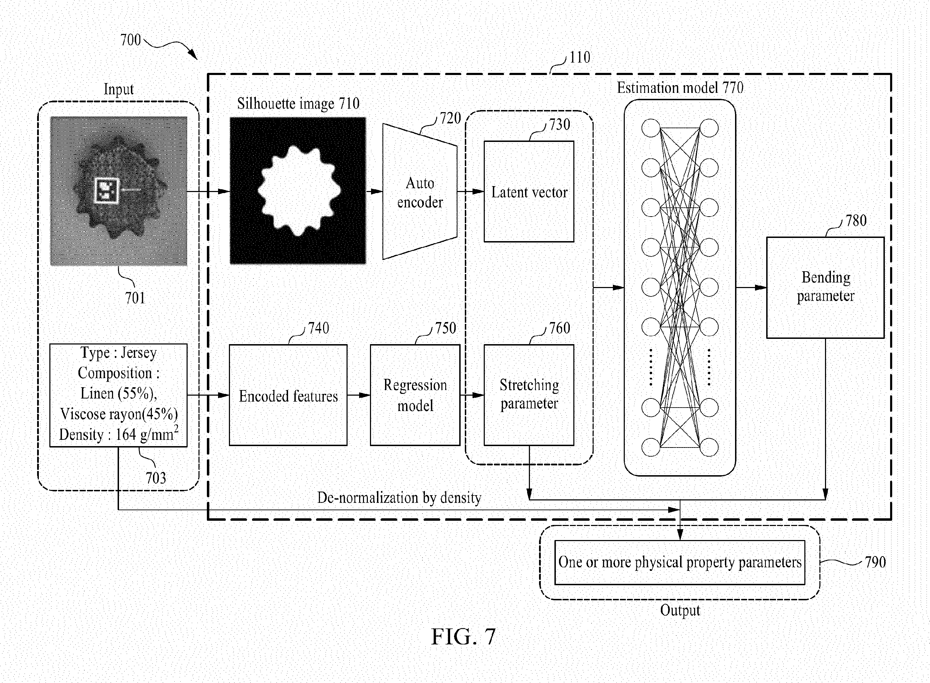

As is described in detail below, the neural network model 110 may include, for example, at least one of a regression model (e.g., a regression model 750 of FIG. 7), an auto encoder (e.g., an auto encoder 720 of FIG. 7), or an estimation model (e.g., an estimation model 770 of FIG. 7). The regression model may estimate the stretching parameter related to the stretching of the target fabric, based on the basic information 103 of the target fabric. The auto encoder may calculate a latent vector corresponding to the 2D image 101. The estimation model may be a neural network trained to estimate the bending parameter related to the bending of the target fabric, based on the latent vector calculated by the auto encoder and the stretching parameter estimated by the regression model.

The estimation apparatus 100 may reproduce the static draped shape of the target fabric by using the physical property parameter of the target fabric estimated by the neural network model 110.

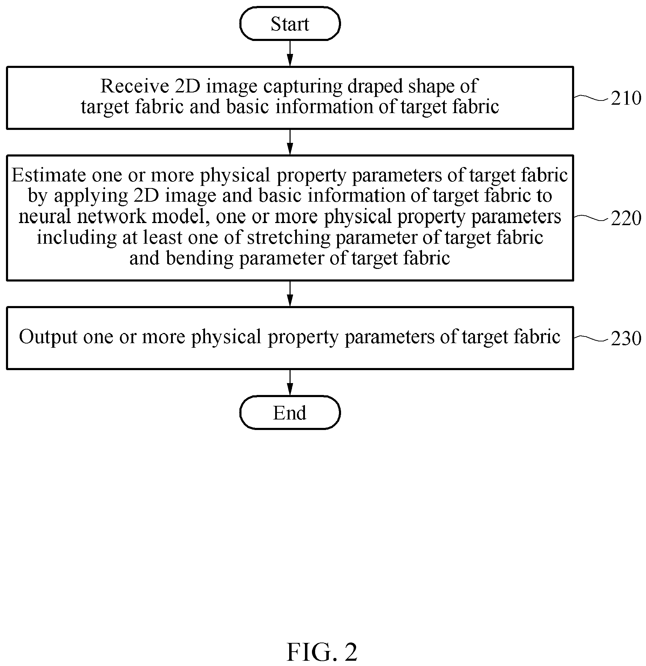

FIG. 2 is a flowchart illustrating a method of estimating the one or more physical property parameters of the target fabric according to an embodiment. Operations to be described hereinafter may be performed sequentially but may not necessarily be performed sequentially. For example, the order of the operations may change and at least two of the operations may be performed in parallel. Referring to FIG. 2, an estimation apparatus according to an embodiment may output the one or more physical property parameters of the target fabric through operations 210 to 230.

In operation 210, the estimation apparatus may receive a 2D image (e.g., the 2D image of FIG. 1) capturing a draped shape of the target fabric and the basic information (e.g., the basic information 103 of the target fabric of FIG. 1) of the target fabric.

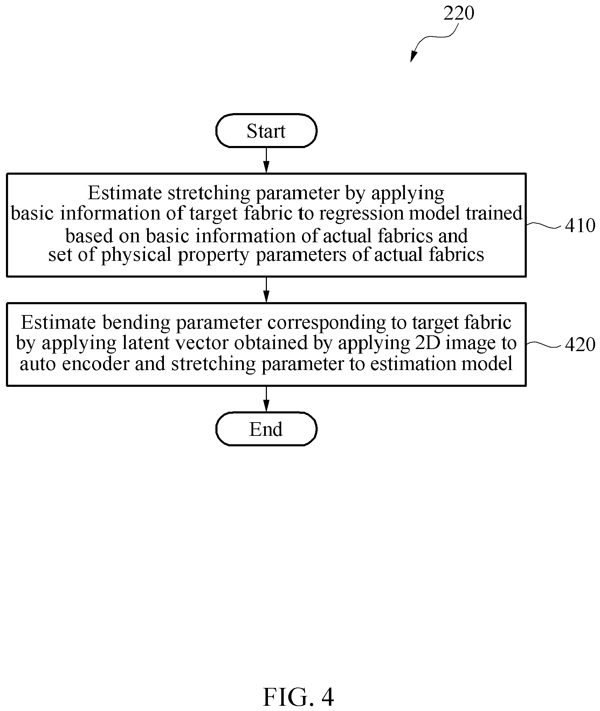

In operation 220, the estimation apparatus may estimate the one or more physical property parameters of the target fabric by applying the 2D image and the basic information of the target fabric that are received in operation 210 to a neural network model, the one or more physical property parameters including at least one of a stretching parameter of the target fabric and a bending parameter of the target fabric. There may be one physical property parameter of the target fabric or a plurality of physical property parameters of the target fabric. Hereinafter, for ease of description, the stretching parameter of the target fabric and the bending parameter of the target fabric may be simply expressed by the "stretching parameter" and the "bending parameter", respectively. The method of the estimation apparatus estimating the one or more physical property parameters of the target fabric is described in detail below with reference to FIGS. 4 to 6.

In operation 230, the estimation apparatus may output the one or more physical property parameters of the target fabric that is estimated in operation 220. The estimation apparatus may output the one or more physical property parameters of the target fabric that is estimated in operation 220 explicitly or implicitly. In an embodiment, 'explicitly outputting' the one or more physical property parameters of the target fabric may include displaying a value of the one or more physical property parameters of the target fabric directly through a panel of a display and/or outputting the value on paper or the like. In addition, 'implicitly outputting' the one or more physical property parameters of the target fabric may include, for example, displaying a simulation result of 3D clothes produced by fabric to which the one or more physical property parameters estimated in operation 220 is applied, or a drape simulation result of the 3D clothes produced by the fabric to which the one or more physical property parameters estimated in operation 220 is applied on an object, such as a 3D avatar.

In operation 230, the estimation apparatus may display a 3D drape simulation result corresponding to the 3D clothes by applying the one or more physical property parameters to the target fabric used for the 3D clothes draped on the object.

FIG. 3 is a diagram illustrating a method of obtaining a 2D image according to an embodiment.

For example, woven fabric may be classified and indexed by using the physical feature or mechanical feature of the woven fabric, which is measured by a special device. However, such a physical measurement is hardly helpful for general clothes designers when comparing fabrics or selecting a fabric for new clothes, and even veteran designers may not readily intuit a physical impact on a final appearance of clothes made of a certain woven fabric.

Accordingly, the clothing industry has been focused on a drape feature rather than a physical property of fabric. The most widely used drape measurement method for acquiring a drape feature may be Cusick's drape test. Cusick's drape test may be a method of observing a draped shape by placing a circular fabric specimen on a circular disk. A drape image acquired through the drape test may be used as a visual index representing the drape property intuitively.

In addition, the drape image may be quantified and used as various numerical indices, such as a drape area ratio, a wrinkle depth, and a wrinkle wave amplitude.

FIG. 3 illustrates an operating process of a drape test device 300 according to an embodiment. Drawing 310 shows a situation in which a fabric 315 that is circular is spread on an upper surface of a cylinder 313 of the drape test device 300. The cylinder 313 may be an example of a 3D geometric object. The 2D image according to an embodiment may be a 2D image 350 capturing a top view of a draped shape observed through the drape test using the drape test device 300.

When the fabric 315 is placed on the circular disk 311, a portion not supported by the cylinder 313 in the fabric 315 may slide down as shown in drawing 330 and may form wrinkles 335 in various shapes. In this case, a horizontal edge of the fabric 315 and a vertical edge of the fabric 315 may be respectively aligned in weft and warp directions, and the stiffness of the weft and warp directions may be distinguished clearly.

The circular disk 311 corresponding to the upper surface of the drape test device 300 may include two separate parts, which are a supporting disk 331 and a dropping disk 333, as shown in drawing 330. In an initial state of the drape test, the supporting disk 331 and the dropping disk 333 may be at the same height as shown in drawing 310. In this case, the whole fabric 315 may be spread flat on the supporting disk 331 and the dropping disk 333.

Then, when letting the dropping disk 333 freely fall while maintaining the height of the supporting disk 331, an area that is not supported by the supporting disk 331 in a circular specimen may freely fall simultaneously. The process that an area not supported by the cylinder 313 in the fabric 315 slides down as shown in drawing 330 due to the free fall of the dropping disk 333, which forms the wrinkles 335 naturally, may be referred to as the "drape test".

In this case, the fabric 315 may be the circular specimen having a certain size. For example, when performing the drape test by using a square specimen, a four-fold cross shape may appear frequently in a test result. The frequent appearance of a cross shape in a test result may be because four corner areas of an unsupported portion are wider than other unsupported areas and may be more affected by gravity. Accordingly, when a cross shape appears frequently, visual variability across the entire draped shape may be limited.

On the other hand, when using a circular specimen in the drape test, the number of folds may be relatively evenly distributed. In other words, the visual variability of drape results for different fabrics may increase when using a circular specimen compared to when using a square specimen.

Accordingly, in an embodiment, the visual variability of physical property parameters estimated by using a 2D image capturing a result of performing a drape test by using a circular specimen may be improved.

In addition, the visual variability of a drape test may be higher in a circular specimen than a square specimen. Accordingly, a circular specimen may have an advantageous effect on estimating a bending parameter. Stretching stiffness may have a non-negligible effect on a drape test result. Accordingly, the stretching stiffness may be considered to estimate a bending parameter from a drape test result. Since stretching parameters may correlate with the basic information of the fabric, the stretching parameters may be regressed on the basic information of the fabric.

In an embodiment, a neural network model trained based on the observation described above may estimate the stretching parameter of the target fabric and the bending parameter of the target fabric.

In addition, a drape test result may be affected by various factors other than the physical features of a fabric itself. Specifically, an initial state of a fabric specimen may have a great impact on a final result. For example, when holding and dropping the fabric specimen by hand, artificial wrinkles may form on a part held by fingers, and results may likely be different depending on where the fabric specimen is held. In an embodiment, the drape test device 300 as shown in FIG. 3 may be used to prevent a final result from varying depending on an initial state of a fabric specimen and maximize the consistency of drape test results.

The drape test device 300 may be made of anti-static plastic. In addition, small holes may be densely formed in the dropping disk 333 to minimize the effect of air pressure when dropping.

The estimation apparatus may receive the 2D image 350 and may generate a 3D model of the target fabric from the 2D image 350. In this case, the 3D model may correspond to a mesh model of fabric. The estimation apparatus may extract coordinates of 3D vertices corresponding to a 3D contour shape of the fabric from the 3D model. The estimation apparatus, for example, may extract vertices from the boundary of the mesh model of the fabric and may determine the coordinates of the extracted vertices to be the coordinates of the 3D vertices corresponding to the 3D contour shape of the fabric.

In this case, the mesh model of the fabric may be modeled to a mesh including, for example, a plurality of polygons (e.g., triangles). Three vertices of a polygon (triangle) may be point-masses having mass, and sides of the triangle may be represented as springs having elasticity, which connects the point-masses. Thus, the fabric may be modeled by a mass-spring model, for example. Springs may have respective resistance values against, for example, stretch, shear, and bending, depending on the physical property parameters of the fabric. Each vertex may move according to the action of an external force, such as gravity, and the action of an internal force, such as stretch, shear, and bending. For example, when a force being applied to each vertex is obtained by calculating the external force and the internal force, the speed of movement and displacement of each vertex may be obtained. Also, a motion of virtual clothes may be simulated through a motion of the vertices of the polygon in each time step. The mass-spring model may be, for example, an anisotropic nonlinear mass-spring model.

In an embodiment, by draping clothes made of fabric that is modeled to a mesh over a 3D avatar, 3D virtual clothes that look natural based on the laws of physics may be implemented.

FIG. 4 is another flowchart illustrating the method of estimating the one or more physical property parameters of the target fabric according to an embodiment. Operations to be described hereinafter may be performed sequentially but may not necessarily be performed sequentially. For example, the order of the operations may change and at least two of the operations may be performed in parallel. Referring to FIG. 4, an estimation apparatus according to an embodiment may estimate a stretching parameter and a bending parameter through operations 410 and 420.

In operation 410, the estimation apparatus may estimate the stretching parameter by applying the basic information of the target fabric to a regression model (e.g., the regression model 750 of FIG. 7) trained based on the basic information of actual fabrics and a set of physical property parameters of the actual fabrics. In this case, the basic information of the actual fabrics may include the type of the actual fabrics and fabric materials forming the actual fabrics, but examples are not necessarily limited thereto. The basic information of the actual fabrics may include, for example, one or more of or a combination of the 64 types described above and the 40 fabric materials described above. In this case, training data used for the training of the regression model may include, for example, the basic information of each fabric and the physical property parameters of each fabric.

The regression model may correspond to a neural network model trained to estimate physical property parameters related to the stretching of the target fabric. The regression model may be, for example, a regressor based on a K-nearest neighbors (K-NN) algorithm, but examples are not necessarily limited thereto. The regressor may model a correlation between multiple independent variables with one dependent variable. Unlike labels of which the classification is not continuous, that is, which class an object is classified into, the regressor may predict an arbitrary number (e.g., a physical property parameter) related to the object. The K-NN algorithm may be a method of predicting a value through the nearest K samples around the value. The K-NN algorithm may, for example, predict the value by using an average of the K samples in the simplest manner.

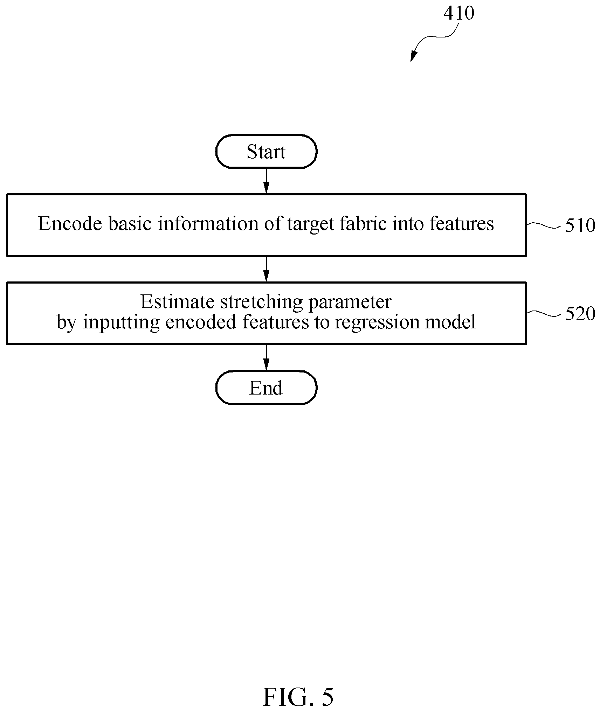

The method of the estimation apparatus estimating the stretching parameter is described in detail below with reference to FIG. 5.

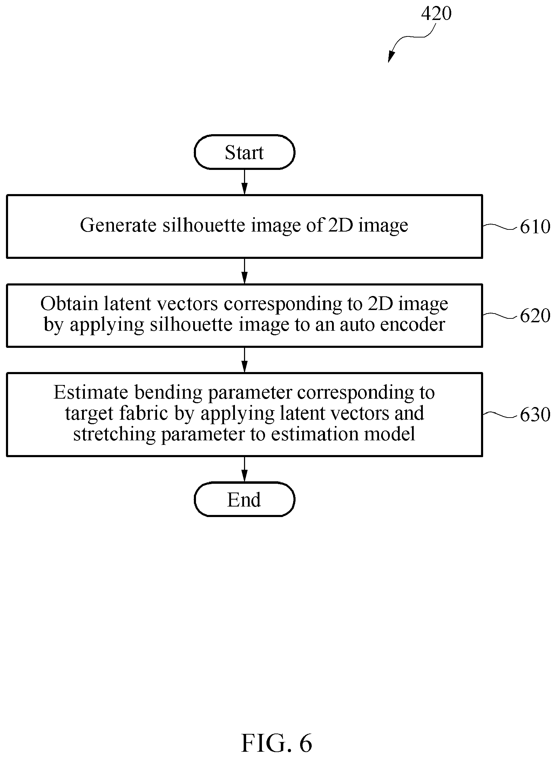

In operation 420, the estimation apparatus may estimate a bending parameter corresponding to the target fabric by applying a latent vector obtained by applying a 2D image to an auto encoder (e.g., the auto encoder 720 of FIG. 7) and the stretching parameter estimated in operation 410 to an estimation model (e.g., the estimation model 770 of FIG. 7). The estimation model may be a neural network trained to estimate a physical property parameter (e.g., the bending parameter) related to the bending of the target fabric. The estimated model may be, for example, a fully connected neural network, but examples are not necessarily limited thereto. The method of the estimation apparatus estimating the bending parameter is described in detail below with reference to FIG. 6.

FIG. 5 is a flowchart illustrating a method of estimating a stretching parameter according to an embodiment. Operations to be described hereinafter may be performed sequentially but may not necessarily be performed sequentially. For example, the order of the operations may change and at least two of the operations may be performed in parallel. Referring to FIG. 5, an estimation apparatus according to an embodiment may estimate the stretching parameter through operations 510 and 520.

In operation 510, the estimation apparatus may encode the basic information of a target fabric into features. The estimation apparatus may, for example, one-hot encode a feature indicating the type of the target fabric of the basic information of the target fabric.

In operation 520, the estimation apparatus may estimate the stretching parameter by inputting the encoded features to a regression model. The regression model may be, for example, a regression model based on the K-Nearest Neighbors algorithm but is not necessarily limited thereto.

The regression model may output a vector of the stretching parameter obtained by dividing the features by the density of the target fabric as the features encoded in operation 510 are input. In this case, the vector of the stretching parameter obtained by dividing the features by the density of the target fabric may be the stretching parameter.

FIG. 6 is a flowchart illustrating a method of estimating a bending parameter according to an embodiment. Operations to be described hereinafter may be performed sequentially but may not necessarily be performed sequentially. For example, the order of the operations may change and at least two of the operations may be performed in parallel. Referring to FIG. 6, an estimation apparatus according to an embodiment may estimate the bending parameter through operations 610 to 630.

In operation 610, the estimation apparatus may generate a silhouette image of the 2D image received in operation 210. The estimation apparatus may generate the silhouette image of the 2D image received in operation 210 by converting an area representing the target fabric in the 2D image into white and converting an area outside the target fabric in the 2D image into black.

In operation 620, the estimation apparatus may obtain latent vectors corresponding to the 2D image by applying the silhouette image generated in operation 610 to an auto encoder (e.g., the auto encoder 720 of FIG. 7). In this case, the auto encoder, which is an artificial neural network trained in an unsupervised manner, may learn representation encoded into input data (e.g., the silhouette image), and then, may generate and output data as closely as possible to the learned encoded representation. The output of the auto encoder may be a prediction value for the input data.

In operation 630, the estimation apparatus may estimate the bending parameter corresponding to the target fabric by applying the latent vectors obtained in operation 620 and the stretching parameter estimated in operation 410 to an estimation model.

FIG. 7 is a diagram illustrating a specific operation of the apparatus for estimating the one or more physical property parameters of the target fabric according to an embodiment. Referring to FIG. 7, the diagram illustrates a process of outputting one or more physical property parameters 790 of the target fabric, including a stretching parameter 760 and a bending parameter 780, estimated by the neural network model 110 by an estimation apparatus 700 according to an embodiment applying a 2D image 701 and basic information 703 of the target fabric to the neural network model 110.

The 2D image 701 may be, for example, a top view image capturing a draped shape of circular specimens of the target fabric.

The basic information 703 of the target fabric may include, for example, the type of the target fabric being jersey, the composition of the target fabric being linen (55 percent (%)) and viscose rayon (45%), and the density of the target fabric being 164 grams per square millimeter (g/mm$^2$).

The estimation apparatus 700 may convert the 2D image 701 into a silhouette image. The estimation apparatus 700 may generate a silhouette image 710 of the 2D image 701 by converting an area (e.g., an area including a draped shape) representing the target fabric in the 2D image 701 into white and converting an area outside the target fabric in the 2D image 701 into black. The silhouette image 710 may have, for example, the pixel size of 256 x 256, but examples are not necessarily limited thereto.

The estimation apparatus 700 may apply the silhouette image 710 to the auto encoder 720. The estimation apparatus 700 may encode the silhouette image 710 into a latent vector 730 by using the auto encoder 720. In an embodiment, by using the silhouette image 710 in 2D instead of a 3D drape image to estimate a bending parameter, not using a rotoscoping device may improve a user's convenience. The estimation apparatus 700 may correct perspective distortion of a plan view image, such as the silhouette image 710, viewed from above.

The auto encoder 720 may calculate the latent vector 730 corresponding to the silhouette image 710. The latent vector 730 may be, for example, a 512-dimensional vector, but examples are not necessarily limited thereto.

In addition, the estimation apparatus 700 may encode the basic information 703 of the target fabric into features (or feature vectors) 740. The estimation apparatus 700 may encode the type of the target fabric included in the basic information 703 of the target fabric into a 64-dimensional one-hot vector, for example. In this case, the composition of the target fabric may be expressed by a percentage value vector for each of 37-dimensional fabrics, for example. Accordingly, the basic information 703 of the target fabric may be encoded into features (or feature vectors) 740 of 101 dimensions. The encoded features 740 of 101 dimensions may be input to the regression model 750.

The estimation apparatus 700 according to an embodiment may acquire the basic information 703 of the target fabric from an external device. For example, the estimation apparatus 700 may receive the basic information 703 of the target fabric from the external device connected through a communication interface. For another example, the estimation apparatus 700 may acquire the basic information 703 of the target fabric from a user. This may be receiving a direct input through an inputter of the estimation apparatus 700.

The regression model 750 according to an embodiment may regress a stretching parameter for the basic information of fabric based on assumptions described below.

First, since the fabric has a similar pattern and structure by each type, the type of the fabric may be associated with anisotropic properties of the fabric (e.g., woven fabric). For example, when the fabric is woven fabric, fiber strength has a dominant effect on the stretching feature of the fabric, and thus, the stretching parameter of the fabric may have a strong correlation with the composition of the fabric (woven fabric). Alternatively, when the fabric is non-woven fabric, a pattern or structure of the fabric may have a great influence on the stretching feature, and thus, the type of the fabric may be associated with the stretching parameter. For example, if the same fiber has different strengths, each fiber may be distinguished through the density of the fiber. Due to the correlations described above, the fabrics having the same type and composition may show similar anisotropic properties. In an embodiment, under the assumptions described above, the regression model 750 may regress the stretching parameter for the basic information of the fabric.

The regression model 750 may be, for example, a regressor model based on a K-NN algorithm, that is, a K-NN regressor, but examples are not necessarily limited thereto. In this case, K = 50, but examples are not necessarily limited thereto.

The regression model 750 may output the stretching parameter 760 obtained by dividing the encoded features 740 of 101 dimensions by the density of the target fabric. The stretching parameter 760 may correspond to, for example, a 6-dimensional vector.

The estimation apparatus 700 may normalize the stretching parameter 760 by log transform, for example. For example, the estimation apparatus 700 may perform log min-max normalization on the stretching parameter 760. The estimation apparatus 700 may normalize the stretching parameter 760 to have a range of, for example, [0, 1], by log transform. In an embodiment, logarithmic transform, such as log transform, may be used based on a research result that a correlation between a change of physical property parameters and a change of a draping shape is in a log linear relationship. The estimation apparatus 700 may output the normalized non-linear stretching parameter 760.

The estimation apparatus 700 may input the stretching parameter 760 and the latent vector 730 obtained from the silhouette image 710 that is obtained as a drape test result into the estimation model 770. The estimation model 770 may be, for example, a fully connected neural network including two hidden layers, in which each hidden layer includes 512 nodes, but examples are not limited thereto.

For example, when comparing actual drape test results of two fabrics having similar bending stiffness and different stretching stiffness, a case where a difference of a draped shape is great could be easily found. As such, the impact of the stretching parameter 760 on a static drape test is not that great but not ignorable.

In an embodiment, the stretching parameter 760 may be used as an input to the estimation model 770 to reflect the impact of the stretching parameter 760 incorporated in a draped shape, such as the silhouette image 710.

In an embodiment, the estimation accuracy of a bending parameter 780 may be improved by determining the impact of the stretching parameter 760 in a drape test result and using the estimation model 770 that estimates the bending parameter 780 by considering the stretching parameter 760.

The estimation model 770 may be a neural network trained to estimate the bending parameter 780 related to the bending of the target fabric, based on the stretching parameter 760 and the latent vector 730 based on the silhouette image 710.

The estimation apparatus 700 may generate training data for the neural network model 110 by sampling the one or more physical property parameters (or a set of physical property parameters) 790 including the stretching parameter 760 and the bending parameter 780 and simulating a drape test. In this case, a parameter space may include the bending parameter 780 as well as the stretching parameter 760 corresponding to an input. The estimation apparatus 700 may fit a Gaussian mixture model (GMM) to physical property parameters of actual fabrics to ensure the validity of the sampled set of physical property parameters. The estimation apparatus 700 may sample the one or more physical property parameters (or the set of physical property parameters) 790 according to a probability distribution of the GMM.

The estimation apparatus 700 may normalize the bending parameter 780 and may generate the normalized non-linear bending parameter 780. The bending parameter 780 may correspond to, for example, a 6-dimensional vector.

In this case, density information included in the basic information 703 of the target fabric may be used for de-normalization when estimating the bending parameter 780 based on the estimation model 770. In addition, the density information may be used for normalization when training the estimation model 770.

The estimation apparatus 700 may output the one or more physical property parameters 790 including the stretching parameter 760 and the bending parameter 780. The one or more physical property parameters 790 may be, for example, a 12-dimensional vector.

The estimation apparatus 700 may display a simulation result for the target fabric by applying the one or more physical property parameters 790 to the target fabric.

The estimation apparatus 700 may simulate a fabric by using a mass-spring model with cloth particles connected to various kinds of spring-like energies, such as stretching and/or bending, based on the Baraff-Witkin formulation. The estimation apparatus 700 may use the physical property parameters shown in Table 1 below to express the physical properties of a cloth material.

Table 1

| Physical Property Parameters | Descriptions |
| --- | --- |
| $\alpha_i, \beta_i$ | Parameters for stretching stiffness |
| $k_{bi}^0, k_{bi}^1$ | Parameters for bending stiffness |

Table 1 may represent the one or more physical property parameters 790 used for a simulation of fabric. Since $i \in \{u, v, h\}$, which is stated in the physical property parameters in Table 1, is defined by warp, weft, and bias directions, the physical property parameters stated in Table 1 may represent a total of 16 physical property parameters.

The Baraff-Witkin formulation may use a constant stiffness value for a spring having elasticity. In practice, fabric may show a non-linear tendency. To accommodate hyper-elastic materials in a spring-based fabric simulation, the estimation apparatus 700 may modify the stiffness to be a function of a length scale $li$ for each basic direction $i = \{u, v, h\}$.

The non-linear relationship between a length scale and stretching stiffness may be, for example, expressed by an exponential function, such as Equation 1 below.

$$\text{Equation 1}$$

$$k_i(l_i) = \alpha_i \exp\left(\beta_i\left(\frac{l_i}{\bar{l}_i} - 1\right)\right)$$

Since force corresponds to a differential term for the length of energy, Equation 1 may be an experimental derivation of a relational equation where bending force (e.g., bending stiffness ki) acts to stretch fabric.

In addition, in an embodiment, an anisotropic non-linear bending energy term calculated for each bending wing including two adjacent triangles in a mesh model to be modeled by the mass-spring model may be defined.

The estimation apparatus 700 may model the bending stiffness ki to a piecewise constant function of a bending angle $\theta$. For example, the estimation apparatus 700 may interpolate the bending stiffness energy term $k_b^i$ of an ith piece in the mesh model of fabric from three bending stiffness values $k_{bu}^i$, $k_{bv}^i$, and $k_{bh}^i$ according to a folding direction of the bending wing.

In an embodiment, for simplicity, the number of pieces used in the mesh model of fabric may be limited to a maximum of two, and a threshold angle switching between the bending stiffness $k_b^0$ and $k_b^1$ may be fixed at 15 degrees.

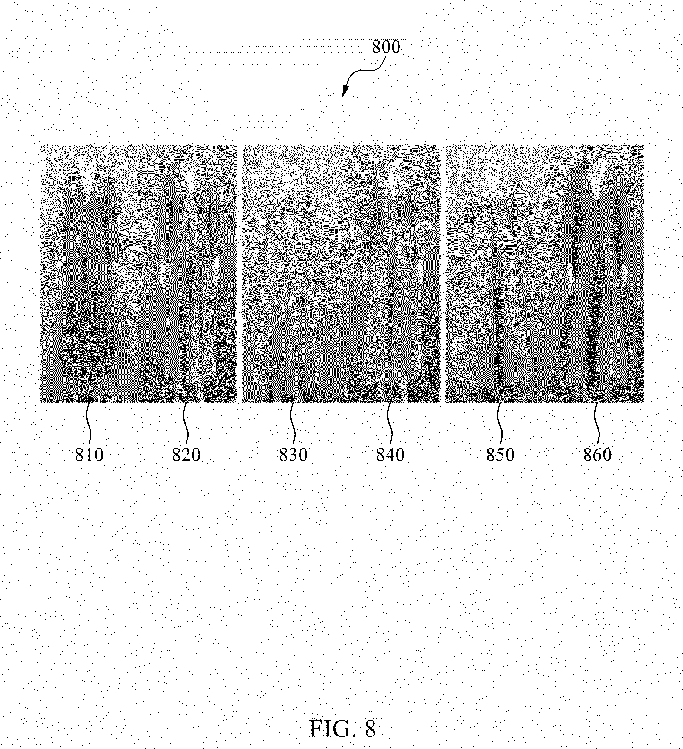

FIG. 8 is a diagram illustrating actual clothes and 3D clothes that are simulated by using the one or more physical property parameters of the target fabric estimated by a neural network model according to an embodiment.

FIG. 8 is a diagram illustrating a draping result of virtual clothes generated with three types of fabric simulated by using physical property parameters estimated by the neural network model according to an embodiment and the actual clothes. Referring to FIG. 8, first drawing 810, third drawing 830, and fifth drawing 850 may each be an image capturing a draping result of actual life-size clothes (e.g., a dress) of the actual fabrics (e.g., chiffon, organza, and neoprene/scuba) over a mannequin, and second drawing 820, fourth drawing 840, and sixth drawing 860 may each be a result image of performing a draping simulation on virtual clothes made of three types (e.g., chiffon, organza, and neoprene/scuba) of the target fabric to which the physical property parameters estimated by the neural network model according to an embodiment is applied.

In FIG. 8, the clothes made of the actual fabrics and the clothes made by applying the estimated physical property parameters may be assumed to be made of the same fiber. As illustrated in FIG. 8, draped shapes appear in the actual clothes and the virtual clothes are similar.

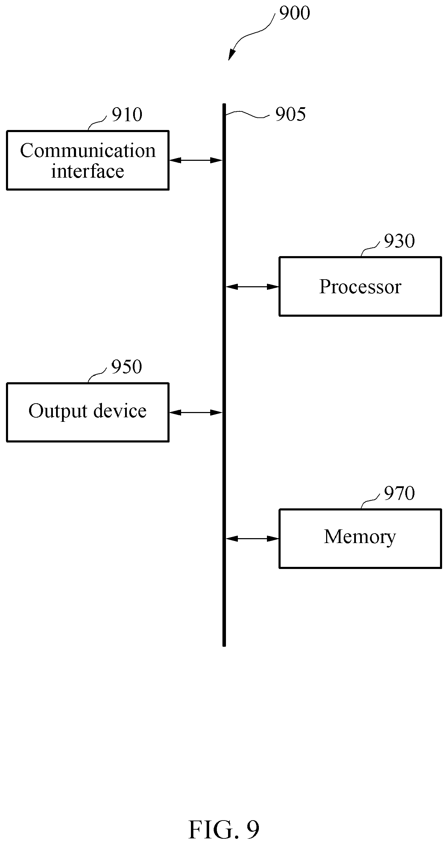

FIG. 9 is a block diagram illustrating the apparatus for estimating the one or more physical property parameter of the target fabric according to an embodiment. Referring to FIG. 9, the estimation apparatus 900 according to an embodiment may include a communication interface 910, a processor 930, an output device 950, and a memory 970. The communication interface 910, the processor 930, the output device 950, and the memory 970 may communicate with each other through a communication bus 905.

The communication interface 910 may receive a 2D image capturing a draped shape of the target fabric and the basic information of the target fabric.

The processor 930 may estimate the one or more physical property parameters of the target fabric including at least one of a stretching parameter of the target fabric and a bending parameter of the target fabric by applying the 2D image received through the communication interface 910 and the basic information of the target fabric to a neural network model. The neural network model may include at least one of a regression model for estimating the stretching parameter related to the stretching of the target fabric, an auto encoder for calculating latent vectors corresponding to the 2D image, and an estimation model trained to estimate the bending parameter related to the bending of the target fabric, based on the latent vectors and the stretching parameter.

The processor 930 may estimate the stretching parameter by applying the basic information of the target fabric to a regression model trained based on the basic information of actual fabrics and a set of physical property parameters of the actual fabrics. The processor 930 may estimate the bending parameter corresponding to the target fabric by applying the latent vectors obtained by applying the 2D image to the auto encoder and the stretching parameter to the estimation model.

The output device 950 may output the physical property parameter estimated by the processor 930.

The output device 950 may output the physical property parameters of fabric estimated by the processor 930. The output device 950 may output physical property parameters themselves or a 3D avatar wearing virtual clothes made of a fabric to which the physical property parameters are applied on a screen. The output device 950 may be, for example, a display device or a printing device displaying a pattern piece on paper or cloth.

The memory 970 may store the basic information of the target fabric and the 2D image obtained through the communication interface 910. In addition, the memory 970 may store the one or more physical property parameters of the target fabric estimated by the processor 930. The memory 970 may store various pieces of information generated in the process, described above, performed by the processor 930. In addition, the memory 970 may store various pieces of data, programs, or the like. The memory 970 may include a volatile memory or a non-volatile memory. The memory 970 may include a massive storage medium, such as a hard disk, and may store the various pieces of data.

In addition, the processor 930 may perform at least one method described with reference to FIGS. 1 to 8 or an algorithm corresponding to the at least one method. The processor 930 may be a data processing device implemented by hardware including a circuit having a physical structure to perform desired operations. For example, the desired operations may include code or instructions in a program. The processor 930 may be implemented as, for example, a central processing unit (CPU), a graphics processing unit (GPU), or a neural network processing unit (NPU). The hardware-implemented estimation apparatus 900 may include, for example, a microprocessor, a CPU, a processor core, a multicore processor, a multiprocessor, an application-specific integrated circuit (ASIC), and a field-programmable gate array (FPGA).

The processor 930 may execute a program and may control the estimation apparatus 900. The code of the program executed by the processor 930 may be stored in the memory 970.

The methods according to the above-described examples may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as CD-ROM discs and/or DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter. The above-described devices may be configured to act as one or more software modules in order to perform the operations of the above-described embodiments, or vice versa.

The software may include a computer program, a piece of code, an instruction, or some combination thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

A number of embodiments have been described above. Nevertheless, it should be understood that various modifications may be made to these embodiments. Suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

**Claims**

1. A method of estimating one or more physical property parameters of a target fabric, the method comprising:

   receiving a two-dimensional (2D) image capturing a draped shape of the target fabric and basic information of the target fabric;

estimating the one or more physical property parameters of the target fabric by applying the 2D image and the basic information of the target fabric to a neural network model, the one or more physical property parameters comprising at least one of a stretching parameter of the target fabric or a bending parameter of the target fabric; and

outputting the one or more physical property parameters of the target fabric.

2. The method of claim 1, wherein the basic information of the target fabric comprises:
at least one of a type of the target fabric, composition of the target fabric, a density of the target fabric, a weight of the target fabric, a thickness of the target fabric, dyeing of the target fabric, and adding of printing to the target fabric.

3. The method of claim 1, wherein the neural network model comprises at least one of:

a regression model configured to estimate the stretching parameter related to stretching of the target fabric, based on the basic information of the target fabric;
an auto encoder configured to calculate latent vectors corresponding to the 2D image; or
an estimation model trained to estimate the bending parameter related to bending of the target fabric, based on the latent vectors and the stretching parameter.

4. The method of claim 1, wherein the estimating of the one or more physical property parameters of the target fabric comprises:

estimating the stretching parameter by applying the basic information of the target fabric to a regression model trained based on basic information of actual fabrics and a set of physical property parameters of the actual fabrics; and
estimating the bending parameter corresponding to the target fabric by applying latent vectors obtained by applying the 2D image to an auto encoder and the stretching parameter to an estimation model.

5. The method of claim 4, wherein the estimating the stretching parameter comprises:

encoding the basic information of the target fabric into features; and
estimating the stretching parameter by feeding the encoded features to the regression model.

6. The method of claim 5, wherein the encoding comprises encoding the features indicating a type of the target fabric among the basic information of the target fabric.

7. The method of claim 5, wherein the regression model is configured to output a vector of the stretching parameter obtained by dividing the features by a density of the target fabric as the encoded features are received.

8. The method of claim 4, wherein the estimating the bending parameter comprises:

obtaining the latent vectors corresponding to the 2D image by applying a silhouette image of the 2D image to the auto encoder; and
estimating the bending parameter corresponding to the target fabric by applying the latent vectors and the stretching parameter to the estimation model.

9. The method of claim 8, wherein the obtaining the latent vectors comprises:
generating the silhouette image of the 2D image by converting an area representing the target fabric in the 2D image into white and converting an area outside the target fabric in the 2D image into black.

10. The method of claim 1, wherein the stretching parameter correlates with the basic information of the target fabric, and the bending parameter correlates with the draped shape of the target fabric.

11. The method of claim 1, wherein the outputting the one or more physical property parameters of the target fabric comprises:
displaying a 3D drape simulation result corresponding to 3D clothes by applying the one or more physical property parameters to the target fabric used for the 3D clothes draped on an object.

12. The method of claim 1, wherein the stretching parameter comprises at least one of a weft stretch force parameter, a wrap stretch force parameter, or a shear parameter.

13. The method of claim 1, wherein the bending parameter comprises at least one of a weft bending force parameter, a warp bending force parameter, or a diagonal bending force parameter.

14. The method of claim 1, wherein the 2D image comprises a top view image capturing the draped shape of a circular specimen of the target fabric.

15. An apparatus for estimating one or more physical property parameters of a target fabric, the apparatus comprising:

a communication interface configured to receive a two-dimensional (2D) image capturing a draped shape of the target fabric and basic information of the target fabric;
a processor configured to estimate the one or more physical property parameters of the target fabric by applying the 2D image and the basic information of the target fabric to a neural network model, the one or more physical property parameters comprising at least one of a stretching parameter of the target fabric or a bending parameter of the target fabric; and
an output device configured to output the one or more physical property parameters.

100

101

2D image

103

Basic information
of target fabric

110

Neural network
model

105

One or more physical
property parameter of
target fabric

FIG. 1

```
                    ┌─────────────┐
                    │    Start    │
                    └──────┬──────┘
                           │
                           ▼
  ┌──────────────────────────────────────────────────────┐
  │         Receive 2D image capturing draped shape of    │
  │    target fabric and basic information of target fabric│ ~210
  └──────────────────────────┬───────────────────────────┘
                             │
                             ▼
  ┌──────────────────────────────────────────────────────┐
  │ Estimate one or more physical property parameters of  │
  │   target fabric by applying 2D image and basic        │
  │   information of target fabric to neural network model,│ ~220
  │   one or more physical property parameters including  │
  │   at least one of stretching parameter of target fabric│
  │   and bending parameter of target fabric              │
  └──────────────────────────┬───────────────────────────┘
                             │
                             ▼
  ┌──────────────────────────────────────────────────────┐
  │ Output one or more physical property parameters of    │ ~230
  │                   target fabric                        │
  └──────────────────────────┬───────────────────────────┘
                             │
                             ▼
                    ┌─────────────┐
                    │     End     │
                    └─────────────┘
```

FIG. 2

FIG. 3

220

```
    ┌─────────┐
    │  Start  │
    └─────────┘
         │
         ▼
┌────────────────────────────────────────────────────────┐
│          Estimate stretching parameter by applying      │
│ basic information of target fabric to regression model  │       410
│       trained based on basic information of actual      │
│          fabrics and set of physical property           │
│              parameters of actual fabrics               │
└────────────────────────────────────────────────────────┘
         │
         ▼
┌────────────────────────────────────────────────────────┐
│  Estimate bending parameter corresponding to target     │
│  fabric by applying latent vector obtained by applying  │       420
│  2D image to auto encoder and stretching parameter to   │
│                 estimation model                        │
└────────────────────────────────────────────────────────┘
         │
         ▼
    ┌─────────┐
    │   End   │
    └─────────┘
```

FIG. 4

410

```
          ┌─────────────┐
          │    Start     │
          └──────┬──────┘
                 │
                 ▼
┌────────────────────────────────────────────────────┐
│  Encode basic information of target fabric into features │  ～510
└────────────────────────────┬───────────────────────┘
                             │
                             ▼
┌────────────────────────────────────────────────────┐
│              Estimate stretching parameter          │
│   by inputting encoded features to regression model  │  ～520
└────────────────────────────┬───────────────────────┘
                             │
                             ▼
                    ┌─────────────┐
                    │     End     │
                    └─────────────┘
```

FIG. 5

420

```
                      ┌─────────┐
                      │  Start  │
                      └────┬────┘
                           │
          ┌────────────────▼────────────────┐
          │ Generate silhouette image of 2D │ ──~610
          │             image               │
          └────────────────┬────────────────┘
                           │
          ┌────────────────▼────────────────┐
          │ Obtain latent vectors           │
          │ corresponding to 2D image       │ ──~620
          │ by applying silhouette image    │
          │ to an auto encoder              │
          └────────────────┬────────────────┘
                           │
          ┌────────────────▼────────────────┐
          │ Estimate bending parameter      │
          │ corresponding to target fabric  │ ──~630
          │ by applying latent vectors and  │
          │ stretching parameter to         │
          │ estimation model                │
          └────────────────┬────────────────┘
                           │
                      ┌────▼────┐
                      │   End   │
                      └─────────┘
```

FIG. 6

FIG. 7

FIG. 8

900

910

Communication
interface

905

930

Processor

950

Output device

970

Memory

FIG. 9

Europäisches
Patentamt

European
Patent Office

Office européen
des brevets

# EUROPEAN SEARCH REPORT

Application Number

EP 24 15 3837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/076405 A1 (CHOI MYUNG GEOL [KR] ET AL) 10 March 2022 (2022-03-10)<br>* abstract *<br>* [0036], [0038], [0040], [0052], [0053], [0056], [0057], [0059], [0060], [0061] *<br>* claims 5, 8, 12, 14 *<br>* figures 3, 4 * | 1-15 | INV.<br>G06F30/17<br>G06F30/27<br>G06V10/82<br><br>ADD.<br>G06F113/12 |
| X | JU EUNJUNG ET AL: "Estimating Cloth Simulation Parameters From a Static Drape Using Neural Networks",<br>IEEE ACCESS, IEEE, USA,<br>vol. 8, 23 October 2020 (2020-10-23),<br>pages 195113-195121, XP011818147,<br>DOI: 10.1109/ACCESS.2020.3033765<br>[retrieved on 2020-11-03]<br>* abstract *<br>* pg. 195113, col. 2, par. 2<br>pg. 195115, col. 1, section. III, par. 1-3<br>section IV, par. 1, 3<br>section VII.C, par. 1, 2 *<br>* figure 11b; table 1 * | 1-15 | |
| X | FENG XUDONG XUDONGFENG@ZJU EDU CN ET AL: "Learning-Based Bending Stiffness Parameter Estimation by a Drape Tester",<br>ACM TRANSACTIONS ON GRAPHICS, ACM, NY, US,<br>vol. 41, no. 6,<br>30 November 2022 (2022-11-30), pages 1-16,<br>XP058930653,<br>ISSN: 0730-0301, DOI:<br>10.1145/3550454.3555464<br>* abstract *<br>* pg. 1, col. 1, par. 1<br>section 3, par. 1, 2<br>pg. 221:4, col.1 , par. 1<br>pg. 221:5, col. 1, par. 1<br>section 6, par. 1 *<br>* figures 3, 6b, 21, 26 * | 1-15 | TECHNICAL FIELDS SEARCHED (IPC)<br><br>G06F<br>G06V |

The present search report has been drawn up for all claims

| Place of search | Date of completion of the search | Examiner |
|---|---|---|
| Munich | 13 June 2024 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 3837

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | Publication date |
|---|---|---|---|
| US 2022076405 A1 | 10-03-2022 | CA 3191980 A1 | 10-03-2022 |
| | | CN 114241473 A | 25-03-2022 |
| | | EP 3975134 A1 | 30-03-2022 |
| | | JP 7462111 B2 | 04-04-2024 |
| | | JP 2023540600 A | 25-09-2023 |
| | | KR 20220032270 A | 15-03-2022 |
| | | KR 20230035282 A | 13-03-2023 |
| | | US 2022076405 A1 | 10-03-2022 |
| | | WO 2022050810 A1 | 10-03-2022 |

EPO FORM P0459

For more details about this annex : see Official Journal of the European Patent Office, No. 12/82

**EP 4 407 506 A1**

**REFERENCES CITED IN THE DESCRIPTION**

**Patent documents cited in the description**

- KR 1020230010372
- KR 1020230183013